Europäisches Patentamt

European Patent Office

Office européen des brevets

(11) Veröffentlichungsnummer: **0 173 998 B1**

# EUROPÄISCHE PATENTSCHRIFT

(45) Veröffentlichungstag der Patentschrift: **15.05.91**

(51) Int. Cl.⁵: **G01S 3/04**, G01S 3/14

(21) Anmeldenummer: **85111061.9**

(22) Anmeldetag: **02.09.85**

(54) **Verfahren und Vorrichtung zur Peilung von nach dem Frequenzsprungverfahren arbeitenden Sendern.**

(30) Priorität: 03.09.84 DE 3432357

(43) Veröffentlichungstag der Anmeldung:
**12.03.86 Patentblatt 86/11**

(45) Bekanntmachung des Hinweises auf die
Patenterteilung:
**15.05.91 Patentblatt 91/20**

(84) Benannte Vertragsstaaten:
**DE FR GB IT**

(56) Entgegenhaltungen:
**DE-A- 2 335 904**
**DE-B- 1 094 318**
**GB-A- 2 123 256**

**TECHNISCHE MITTEILUNGEN AEG-
TELEFUNKEN, Band 59, Nr. 7, 1969, Seiten
400-409, Berlin, DE; G. BODEMANN et al.:
"UKW-Peilantennen und -Peilvorsätze für
das Funkpeilsystem Telegon IV"**

(73) Patentinhaber: **C. Plath GmbH Nautisch-
Elektronische Technik
Gotenstrasse 18
W-2000 Hamburg 1(DE)**

(72) Erfinder: **Michael, Mankopf, Prof. Dr.-Ing.
Seekante 39
W-2300 Kiel 17(DE)**

(74) Vertreter: **Vossius & Partner
Siebertstrasse 4 P.O. Box 86 07 67
W-8000 München 86(DE)**

EP 0 173 998 B1

## Beschreibung

Die Erfindung betrifft ein Verfahren und eine Vorrichtung zur Peilung von Signalquellen, die nach dem Frequenzsprungverfahren arbeiten und bei denen die Frequenz zwischen verschiedenen, teilweise willkürlichen Werten eines einen vorgegebenen Gesamtfrequenzbereich ausfüllenden Frequenzrasters sprunghaft geändert wird.

Es werden in zunehmendem Maße Nachrichtensender eingesetzt, die nach dem Frequenzsprungverfahren oder "frequency hopping" arbeiten, um eine bessere Ausnutzung vorhandener Kanäle und eine höhere Störsicherheit zu erzielen. Derartige Sender ändern ihre Signalfrequenz zeitlich in periodischer oder pseudozufälliger Weise. Um von autorisierten Empfängern empfangen und entschlüsselt werden zu können, gehören die Sprungfrequenzen einem bestimmten Raster an. Meist weist der Sender ein Kammfrequenzspektrum auf, bei dem die einzelnen Frequenzen in einer arithmetischen Reihe gestaffelt sind und ihre Frequenzdifferenz konstant ist.

Um derartige Sender empfangen zu können, ist auf der autorisierten Empfängerseite eine Synchronisationseinrichtung vorgesehen, die dafür sorgt, daß die augenblicklich gesendete Frequenz vom Empfänger erfaßt werden kann. Mit einem üblichen Fremdempfänger, beispielsweise einem Peilempfänger, der der Nachrichtenverbindung nicht angehört und nicht autorisiert ist, ist der Empfang derartiger frequenzagiler Sender nicht möglich, da diesem die Synchronisation der meist pseudozufälligen Folge der angesprungenen Frequenzen fehlt. Dies gilt auch dann, wenn das feste Raster der einzelnen Sprungfrequenzen an sich bekannt ist.

Um den Empfang derartiger Sender dennoch zu ermöglichen, wurden sehr aufwendige Empfänger konzipiert, die meist eine Frequenznachsteuerung anstreben. Derartige Empfänger sind aber schwer zu realisieren und weisen keine befriedigenden Ergebnisse auf.

Aus der DE-OS 32 22 993 ist ein Funk-Synchronisationssystem für die Synchronisierung eines Empfängers mit einem nach dem Frequenzsprungverfahren arbeitenden Sender bekannt. Der Betrieb des Empfängers soll bei diesem System durch Synchronisierschaltkreise und Übermittlung von Zeitinformationen derart mit dem Sender synchronisiert werden, daß der Empfänger die Übertragungen auf den verschiedenen Sprungfrequenzen des Senders empfangen kann.

Aus der GB-A-2 123 256 ist ein Störsender mit einem Kammspektrumgenerator bekannt. Ziel ist dabei, Sendungen, die nach dem Frequenzsprungverfahren arbeiten, wirksam zu stören. Dazu wird eine von dem Kammspektrumgenerator erzeugte Steuerimpulsfolge zunächst verstärkt und dann über eine Sendeantenne abgestrahlt.

Gemäß einer Variante enthält der Störsender drei Kammspektrumgeneratoren, die zusammen ein zu störendes Frequenzband überdecken. Die Signale der einzelnen Kammspektrumgeneratoren sollen nur dann der Antenne zugeführt werden, wenn von der Antenne ein Signal empfangen wird, das in das vom Kammspektrumgenerator überdeckte Frequenzspektrum fällt.

Um festzustellen, ob von der Antenne empfangene Signale in die von einem einzelnen Kammspektrumgenerator überdeckte Bandbreite fallen, ist jedem Kammspektrumgenerator ein Mischer zugeordnet, dem einerseits die empfangenen Signale und andererseits die Signale des jeweiligen Kammspektrumgenerators zugeführt werden. Je nachdem, in welches Frequenzband das empfangene Signal fällt, wird über einen Schalter das Signal des entsprechenden Kammspektrumgenerators auf den Verstärker gegeben und dann über die Antenne abgestrahlt.

Im Gegensatz zur vorliegenden Erfindung werden mit diesem bekannten Störsender Störsignale zur Störung von nach dem Frequenzsprungverfahren arbeitenden Sendern erzeugt. Dabei geht es lediglich darum, eine ausgestrahlte Sendung unkenntlich zu machen, die Peilung des Senders wird nicht angestrebt.

Aus der DE-B-1 094 318 ist eine Funkpeilanordnung zur automatischen Anzeige von Sendern auf verschiedener Frequenz bekannt. Diese bekannte Funkpeilanordnung besteht aus einer Kombination eines Panoramagerätes mit einem Doppelkanal-Sichtfunkpeiler. Dabei wird ein bestimmter Frequenzbereich überwacht und gleichzeitig am Panoramagerät und am Sichtfunkpeiler zur Anzeige gebracht, indem der Frequenzbereich mit einer bestimmten Wobbelfrequenz durchlaufen wird. Damit sichergestellt ist, daß auch Kurzsignale noch angezeigt werden, ist gemäß DE-B-1 094 318 die Wobbelfrequenz so zu wählen, daß das Kurzsignal beim einmaligen Durchwobbeln des gesamten Frequenzbereiches erfaßt wird.

In der DE-B-1 094 318 wird als besonderer Vorteil genannt, daß aus den Peilungen, die gleichzeitig mit den Anzeigen auf verschiedenen Frequenzen des jeweils gewählten Überwachungsbereiches erscheinen, wesentliche Schlüsse über die Art der Sendung gezogen werden können. Wenn z.B. für einen bestimmten Sender die Aufteilung der für einen Funkspruch gewählten Sendezeit auf verschiedene Frequenzen zur Erschwerung der Funküberwachung (Frequenzsprungverfahren) erfolgt, so liefert die mit dem Panoramagerät parallel geschaltete Sichtpeilanzeige, bei der die Peilungen sämtlicher Frequenzen im gleichen Azimut erscheinen, sofort die eindeutige Information, daß die verschiedenen, am Panoramagerät beobachteten Anzeigen auf verschiedenen Frequenzen von einem Senderstandort ausgestrahlt werden. Damit sind die technischnen Voraussetzungen für die Durchführbarkeit sogenannter Kurzzeitpeilungen wesentlich verbessert.

Demgegenüber wird gemäß einem Merkmal der vorliegenden Erfindung das empfangene Signal, das eine bestimmte Augenblicksfrequenz aufweist, mit einem Kammfrequenzspektrum gemischt und das erzeugte zwischenfrequente Signal wird an den Eingang des Zwischenfrequenzteiles eines Peilempfängers geführt.

Ein weiteres Problem tritt dann auf, wenn im vorgegebenen Gesamtfrequenzbereich des Frequenzrasters des Senders ein mit fester Frequenz arbeitender weiterer Sender oder Störsender arbeitet. In diesem Falle wird es vom Sender in aller Regel vermieden, daß eine seiner Sprungfrequenzen dieser Festfrequenz entspricht, weil dadurch den autorisierten Empfängern der Empfang erschwert wird; es läßt sich aber dennoch kaum vermeiden, daß ein derartiger Festsender innerhalb des gesamten Frequenzbereiches auftritt, der den Empfang des zu peilenden Senders zusätzlich erschwert.

Der Erfindung liegt somit die Aufgabe zugrunde, ein Verfahren und eine Vorrichtung bereitzustellen, mit denen die Peilung von nach dem Frequenzsprungverfahren arbeitenden Sendern in einfacher und zuverlässiger Weise möglich ist.

Diese Aufgabe wird mit dem Verfahren gemäß Anspruch 1 bzw. mit der Vorrichtung gemäß Anspruch 6 gelöst. Die Erfindung geht dabei von dem Grundgedanken aus, sämtliche für den Empfang aller auftretenden Sprungfrequenzen der Signalquelle erforderlichen Oszillatorfrequenzen gleichzeitig für die Mischung mit dem Empfangssignal zur Verfügung zu stellen. Dadurch weist die Differenz aus der augenblicklichen Empfangsfrequenz und einer entsprechenden Komponente des Oszillatorfrequenz-Gemisches bzw. das Mischprodukt aus diesen beiden Frequenzen stets die gleiche Zwischenfrequenz auf. Dieses Peilverfahren ist einfacher und zuverlässiger zu realisieren als die Frequenznachsteuerung eines Überlagerungs-Oszillators.

Wenn die Sprungfrequenzen der Signalquelle einem festen Raster angehören, weisen auch die Bestandteile des verwendeten Oszillator-Frequenzgemisches eine entsprechende Rasterung auf. Dieses Oszillator-Frequenzgemisch weist deshalb die Charakteristik eines Kammfrequenzspektrumsauf, bei dem die Differenz zwischen benachbarten Frequenzen jeweils gleich ist; die einzelnen Frequenzen sind nach einer arithmetischen Reihe gestaffelt. Im Rahmen der Erfindung können aber auch andere Frequenzraster zur Mischung mit dem Empfangssignal verwendet werden.

Das durch die Mischung der augenblicklich empfangenen Frequenz mit dem Kammfrequenzspektrum erzeugte zwischenfrequente Signal wird dem Eingang des Zwischenfrequenzteiles eines Peilempfängers zugeführt. Als Peilempfänger eignet sich insbesondere ein nach dem Watson-Watt-Prinzip arbeitender Doppelkanalpeiler, bei dem die beiden den orthogonalen Richtungen entsprechenden Peilspannungen den Plattenpaaren einer Braun'schen Röhre zugeführt werden, da beim Watson-Watt-Peiler das Peilbild verzögerungsfrei erscheint. Außerdem besteht die Möglichkeit, auch bei gleichzeitigem Einfall zweier oder mehrerer Frequenzsprungsignale durch Auswertung der Sichtanzeige, beispielsweise eines Parallelogrammes, die einzelnen Peilwinkel zu ermitteln.

Um einwandfreie Peilungen von nach dem Frequenzsprungverfahren arbeitenden Sendern zu erhalten, werden Festsender, die innerhalb des Gesamtfrequenzbereiches des nach dem Frequenzsprungverfahren arbeitenden Senders Signale aussenden, vom Empfang und damit von der Peilung ausgeschlossen Andernfalls würden die Signale dieser mit konstanter Frequenz arbeitenden Störsender mit dem verwendeten Kammfrequenzspektrum ebenfalls Mischprodukte ausbilden, die sich den gesuchten Zwischenfrequenzprodukten überlagern und deren Ermittlung erschweren würden. Wenn ein derartiger Störsender ausgeblendet wird, ist es allerdings schwierig, den Sendeinhalt des gesuchten, nach dem Frequenzsprungverfahren arbeitenden Senders vollständig zu erfassen; in diesem Fall wird durch das erfindungsgemäße Verfahren insbesondere die Peilung des gesuchten Senders angestrebt.

Damit das Zwischenfrequenzsignal des Störsenders mit dem Kammfrequenzspektrum unterdrückt werden kaum, wird die der Frequenz des Störsenders benachbarte Kammfrequenz unterdrückt, und es entsteht um diese Kammfrequenz kein Mischprodukt mehr; es müssen also diejenigen Einzelfrequenzen des Kammfrequenzspektrums unterdrückt werden, die sich von den festen Frequenzen eines oder mehrerer Störsender genau oder höchstens um die Zwischenfrequenz unterscheiden. Der beim erfindungsgemäßen Verfahren zur Herstellung des Kammfrequenzspektrums verwendete Kammfrequenzgenerator ist also in der Lage sein, einzelne Frequenzen des Kammfrequenzspektrums gezielt auszublenden.

Soweit die Festfrequenzen von im Gesamtfrequenzbereich des nach dem Frequenzsprungverfahren arbeitenden gesuchten Senders Signale aussendenden Störsendern bekannt sind, können die entsprechenden Einzelfrequenzen des Kammfrequenzspektrums gezielt unterdrückt werden. Weitere Festfrequenzen, die nicht in Verzeichnissen von Sendestationen aufgeführt sind und bei denen auch damit gerechnet werden muß, daß sie nur zeitweilig ausgestrahlt werden, können durch einen als Panoramaempfänger ausgebildeten Abtastempfänger ermittelt werden, der den Gesamtfrequenzbereich überstreicht und die Festfrequenzsender ermittelt. Der Abtastempfänger bewirkt vorzugsweise unmittelbar über eine Steuerschaltung die Ausblendung der betreffen den Einzelfrequenzen des Kammfrequenzspektrums, die sich von den ermittelten Festfrequenzen etwa um die Zwischenfrequenz unterscheiden oder eine noch geringere Frequenzdifferenz aufweisen.

Wenn das der Signalquelle zur Verfügung stehende Frequenzraster bekannt ist, wird die Differenz zwischen benachbarten Frequenzen des Kammfrequenzspektrums des Empfängers vorzugsweise derart gewählt, daß sie der Differenz zwischen benachbarten Frequenzen des Frequenzrasters der Signalquelle entspricht. Dieser Fall ist besonders günstig, weil dann die Zwischenfrequenzprodukte immer identisch sind, unabhängig davon, welche Frequenz des Sprungfrequenzspektrums von der Signalquelle augenblicklich benutzt wird.

Die Frequenzen bekannter, nach dem Frequenzsprungverfahren arbeitenden Sender weisen häufig ein Raster bzw. einen Frequenzabstand von etwa 25 kHz oder etwa 100 kHz auf. Beispielsweise ist aus der GB-A-2 123 256 ein Kammspektrumgenerator bekannt, der vorzugsweise in einem Gesamtfrequenzbereich von 30 bis 90 MHz ein Kammspektrum erzeugt, bei dem die Abstände der Kanalfrequenz jeweils 25 kHz betragen. Wenn die Rasterung der Frequenzen der Signalquelle 25 kHz beträgt, beträgt der Abstand der einzelnen Frequenzen des beim erfindungsgemäßen Verfahren im Empfänger verwendeten Kammspektrums vorzugsweise ebenfalls 25 kHz. Falls die Rasterung der Signalquelle nicht bekannt ist, wird im Empfänger gegebenenfalls eine möglichst enge Rasterung vorgesehen.

Wird beim erfindungsgemäßen Verfahren der Mischstufe ein sehr breites Kammfrequenzspektrum als Oszillatorspannung zugeführt, die mit der augenblicklichen Frequenz des empfangenen Signales gemischt wird, so macht sich dies durch ein verstärktes Rauschen gegenüber dem Fall der Verwendung einer einzigen Oszillatorfrequenz bemerkbar. Um diesen Zuwachs an Rauschen zu begrenzen, kann das Kammfrequenzspektrum in mehrere Teilspektren zerlegt werden, wobei sich die einzelnen Teilspektren überlappen oder unmittelbar aneinander anschließen, um den Gesamtfrequenzbereich abzudecken. Um die Wahrscheinlichkeit zu erhöhen, daß die augenblickliche Frequenz der Signalquelle in das jeweils aktivierte Teilspektrum fällt, werden die Teilspektren vorzugsweise in einer stochastischen, also quasi-zufälligen und nichtperiodischen Folge abwechselnd an die Mischstufe gelegt. Die Frequenz, mit der zwischen den einzelnen teilspektren umgeschaltet wird, sollte dabei vorzugsweise wesentlich größer sein als diejenige Frequenz, mit der die Signalquelle beim Frequenzsprungverfahren zwischen den einzelnen Sendefrequenzen umschaltet.

Die erfindungsgemäße Vorrichtung zur Peilung von Sendern, die nach dem Frequenzsprungverfahren arbeiten, weist einen Mischer auf, der das augenblicklich empfangene Signal mit dem von einem Kammspektrumgenerator erzeugten Kammfrequenzspektrum mischt. Das vom Mischer erzeugte zwischenfrequente Signal wird dann vorzugsweise über einen Bandfilter, dessen Durchlaßband die Frequenz des zwischenfrequenten Signales umfaßt, dem Eingang des Zwischen frequenz teiles eines Peilgeräts, vorzugsweise einem Watson-Watt-Peiler zugeführt, auf dem das Peilbild verzögerungsfrei erscheint. Die vorrichtung weist außerdem Mittel auf mit denen einzelne Frequenzen des Kammfrequenzspektrums einfach ausgeblendet werden können.

Als Kammspektrumgenerator kann jeder Generator verwendet werden, mit dem eine Folge von einzelnen,nach einer arithmetischen Reihe gestaffelten Frequenzen erzeugt werden kann.

Vorzugsweise weist die erfindungsgemäße Vorrichtung eine Adcock-Antenne zum Empfang der Signale im vorgegebenen Gesamtfrequenzbereich auf.

Die Erfindung wird nachstehend anhand der Zeichnung näher erläutert. Es zeigen: -

Figur 1     schematisch einen Ausschnitt aus dem Gesamtfrequenzbereich des frequenzagilen Senders, und

Figur 2     schematisch eine Ausführungsform der erfindungsgemäßen Vorrichtung.

Im Ausschnitt des Gesamtfrequenzbereiches des frequenzagilen Senders oder "Hoppers" sind die einzelnen Sprungfrequenzen des Hoppers gestrichelt eingezeichnet. Der Gesamtfrequenzbereich beträgt beispielsweise etwa 6 MHz. Die einzelnen Sprungfrequenzen des Hoppers weisen eine konstante Frequenzdifferenz $\Delta$ f auf; das gesamte Raster bildet eine arithmetische Reihe.

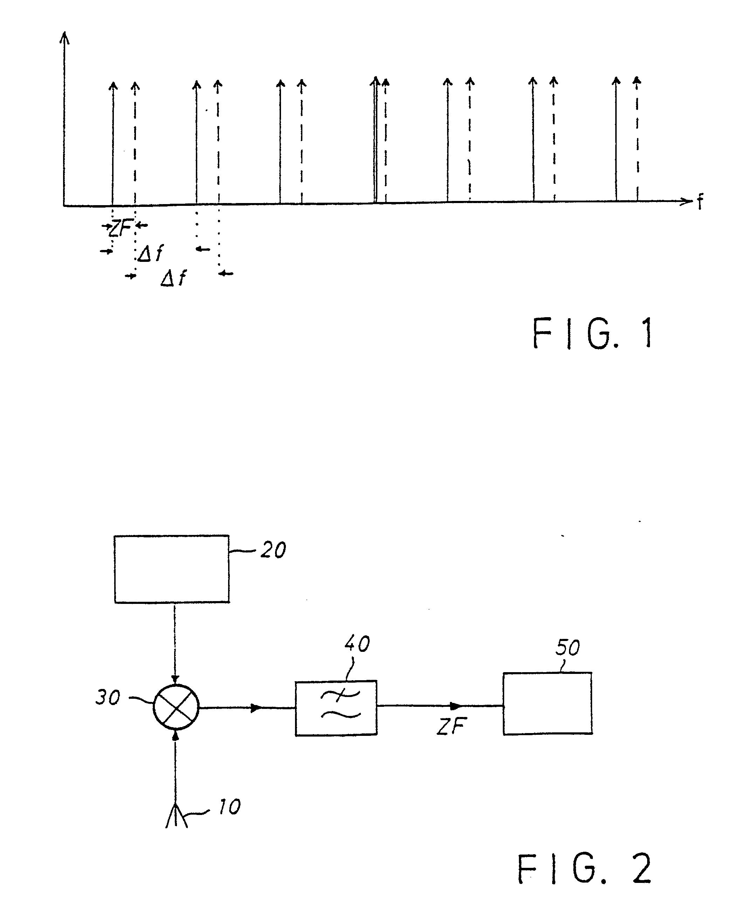

Wenn das Frequenzraster des Hoppers bekannt ist, wird auch für die einzelnen Bestandteile des Oszillatorfrequenzgemisches, das jeweils mit der augenblicklichen Frequenz des Hoppers gemischt wird, eine entsprechende Rasterung gewählt. Wenn die einzelnen Frequenzen des Hoppers nach einer arithmetischen Reihe gestaffelt sind, ist das Oszillatorfrequenzgemisch als Kammfrequenzspektrum ausgebildet, dessen einzelne Frequenzen ebenfalls einen Frequenzabstand $\Delta$ f aufweisen. Ein derartiges Kammfrequenzspektrum ist in Figur 1 mit einfachen, durchgezogenen Linien eingezeichnet. Die Frequenzdifferenz zwischen der augenblicklichen Frequenz des Hoppers und der benachbarten Frequenz des Kammfrequenzspektrums entspricht dann immer einer konstanten Zwischenfrequenz ZF. Bei der Mischung der augenblicklichen Frequenz des Hoppers mit dem Kammfrequenzspektrum wird somit immer ein zwischenfrequentes Signal mit der Frequenz ZF erzeugt. Dieses zwischenfrequente Signal wird erfindungsgemäß zum Empfang und zur Peilung des Hoppers herangezogen.

Wenn das Frequenzraster des Hoppers nicht bekannt ist, wird für das Kammfrequenzspektrum insbesondere ein Raster von 25 kHz angenommen. Es können auch versuchsweise nacheinander oder mit mehreren Kammfrequenzgeneratoren gleichzeitig verschiedene Rasterungen des Kammfrequenzspektrums mit dem augenblicklichen Signal des Hoppers gemischt werden, um daraus dessen Frequenzraster zu ermitteln.

Regelmäßig liegen innerhalb des Gesamtfrequenzbereiches des Hoppers die Festfrequenzen eines oder mehrerer Festsender, die den Empfang des zu peilenden Signales stören. Die Frequenz eines derartigen Störsenders ist in Figur 1 mit einer doppelten Linie eingezeichnet. Die Frequenzen der Störsender lassen sich teilweise aus einer Liste der bekannten Feststationen und/oder der aktuellen Belegung eigener Frequenzen entnehmen. Zusätzlich ist vorzugsweise ein Panoramaempfänger oder Scanner vorgesehen, der den in Frage kommenden Gesamtfrequenzbereich fortlaufend auf 1-Kanal-Sender oder Festsender abtastet.

Um eine einwandfreie Peilung des Hoppers zu erhalten, müssen die Festsender im Gesamtfrequenzbereich vom Empfang ausgeschlossen werden. Deshalb werden diejenigen Frequenzen des Kammfrequenzspektrums, die den Frequenzen der Festsender benachbart und zur Umsetzung der Frequenzen der Festsender auf die Zwischenfrequenz ZF geeignet sind, aus dem Kammfrequenzspektrum ausgeblendet und unterdrückt. Dies ist in Figur 1 schematisch dargestellt, in der das Kammfrequenzspektrum die dem eingezeichneten Festsender unmittelbar benachbarte Frequenz nicht enthält.

Bei der in Figur 2 dargestellten einfachen Ausführungsform der erfindungsgemäßen Vorrichtung empfängt eine Antenne 10 die Signale der Festsender und die augenblickliche Frequenz des zu peilenden Senders im Gesamtfrequenzbereich. Als Antenne 10 wird vorzugsweise eine Adcock-Antenne eingesetzt. Ein Kammspektrumgenerator 20 erzeugt ein Kammfrequenzspektrum, dessen Rasterung der bekannten oder zuvor ermittelten Rasterung des zu peilenden, nach dem Frequenzsprungverfahren arbeitenden Senders entspricht. Das Kammfrequenzspektrum ist insoweit reduziert, als die den bekannten Frequenzen der Festsender benachbarten Frequenzen des Kammfrequenzspektrums unterdrückt werden, vorzugsweise mittels einer aus mehreren Schaltern und zugeordneten Bandpaßfiltern bestehenden Schaltung ,wobei die einzelnen Schalter jeweils einem "Zacken" des Kammfrequenzspektrums zugeordnet sind und diesen "Zacken" wahlweise ein- oder ausschalten. Das reduzierte Kammfrequenzspektrum kann auch durch mehrere Kammfrequenzgeneratoren erzeugt werden, deren Frequenzbereich aneinander anschließt und zwischen denen jeweils stochastisch oder quasi-zufällig umgeschaltet wird, oder es kann ebenfalls stochastisch zwischen mehreren Frequenzbereichen des Gesamtfrequenzbereiches eines Kammspektrumgenerators umgeschaltet werden. Durch diese Verwendung mehrerer engerer Teilspektren oder Frequenzgruppen kann gegebenenfalls der jeweilige Rauschabstand verbessert werden. Das in einem (nicht dargestellten) Filter gefilterte Empfangssignal der Antenne 10 und das reduzierte Kammfrequenzspektrum oder das reduzierte Teilspektrum des Kammspektrumgenerators 20 werden in einem Mischer 30 überlagert. Als Mischer kann jede geeignete Mischstufe verwendet werden, an deren Ausgang die Differenzfrequenzen der beiden zugeführten Signale entnommen werden können. Der Mischer 30 erzeugt ein zwischenfrequentes Signal, das die Differenzfrequenz zwischen der Frequenz des Empfangssignals und der benachbarten Frequenz des Kammfrequenzspektrums enthält. Diese Zwischenfrequenz ZF ist immer konstant, wenn die Rasterung des Hoppers mit der Rasterung des Kammfrequenzspektrums übereinstimmt. Auf diese Weise werden alle Sprungfrequenzen des frequenzagilen Senders auf eine einzige Zwischenfrequenz "aufsummiert", die zur Detektion herangezogen werden kann. Das zwischenfrequente Signal wird einem Filter 40 zugeführt. Das Filter 40 ist vorzugsweise als Tiefpass ausgebildet, dessen obere Grenzfrequenz etwas größer ist als die halbe Differenz benachbarter Frequenzen des Kammfrequenzspektrums. Wenn die Frequenzdifferenz $\Delta f$ beispielsweise 100 kHz beträft, beträgt die obere Grenzfrequenz des Tiefpass-Filters 40 beispielsweise etwa 51 kHz, da die durch Mischung der augenblicklichen Frequenz des Hoppers mit dem Kammfrequenzspektrum erzeugte Zwischenfrequenz ZF höchstens halb so groß ist wie die Frequenzdifferenz $\Delta f$, wenn die augenblickliche Frequenz des Hoppers genau zwischen zwei benachbarten Frequenzen des Kammfrequenzspektrums liegt; das Filter 40 filtert somit aus dem Frequenzspektrum am Ausgang des Mischers 30 die Zwischenfrequenz ZF heraus. Vorzugsweise beträgt ZF etwa 0,3 $\Delta f$.

Das gefilterte zwischenfrequente Signal wird anschließend einem Peiler 50 zugeführt. Als Peiler 50 wird vorzugsweise ein Watson-Watt-Peiler verwendet, bei dem das Peilbild verzögerungsfrei erscheint. Wenn ein einzelner, nach dem Frequenzsprungverfahren arbeitender Sender oder Hopper empfangen wird, ist auf diese Weise eine einwandfreie Peilung und gegebenenfalls - falls nicht zu viele Störsender im Gesamtfrequenzbereich liegen - auch eine Aufklärung des Sendeinhaltes möglich. Fallen gleichzeitig Signale von mehreren Hoppern im Gesamtfrequenzbereich ein, so ist durch die Auswertung der Sichtanzeige, beispielsweise eines Parallelogrammes des Watson-Watt-Peilers, eine Auflösung und Ermittlung der einzelnen Peilwinkel der verschiedenen Hopper möglich.

## Ansprüche

1. Verfahren zur Peilung von Signalquellen mit sprunghafter Änderung der Frequenz zwischen verschiedenen Werten eines einen vorgegebenen Gesamtfrequenzbereich ausfüllenden Frequenzrasters, **dadurch gekennzeichnet,** daß das eine bestimmte Augenblicksfrequenz aufweisende empfangene Signal mit einem Kammfrequenzspektrum gemischt und ein zwischenfrequentes Signal erzeugt wird, das dem Eingang des Zwischenfrequenzteiles eines Peilempfängers zugeführt wird, und daß im Kammfrequenzspektrum diejenigen Einzelfrequenzen unterdrückt werden, die zur Umsetzung der konstanten Frequenzen von gleichzeitig von mindestens einem Festsender empfangenen Signalen auf die Zwischenfrequenz geeignet sind.

2. Verfahren nach Anspruch 1, **dadurch gekennzeichnet,** daß die Differenz zwischen benachbarten Frequenzen des Kammfrequenzspektrums gleich der Differenz zwischen benachbarten Frequenzen des der Signalquelle zu Verfügung stehenden Frequenzrasters ist.

3. Verfahren nach Anspruch 1 oder 2, **dadurch gekennzeichnet,** daß das Kammfrequenzspektrum in mehrere Teilspektren aufgeteilt ist.

4. Verfahren nach Anspruch 3, **dadurch gekennzeichnet,** daß die Teilspektren in stochastischem Wechsel zur Mischung mit dem empfangenen Signal verwendet werden.

5. Verfahren nach einem der Ansprüche 1 bis 4, **dadurch gekennzeichnet,** daß die konstanten Frequenzen der Festsender von einem den vorgegebenen Gesamtfrequenzbereich überstreichenden Abtastempfänger ermittelt werden.

6. Vorrichtung zur Peilung von Signalquellen mit sprunghafter Änderung der Frequenz zwischen verschiedenen Werten eines einen vorgegebenen Gesamtfrequenzbereich ausfüllenden Frequenzrasters, insbesondere mit einem Verfahren nach einem der Ansprüche 1 bis 6, **gekennzeichnet durch** einen Mischer (30), der das empfangene Signal mit einem von einem Kammspektrumgenerator (20) erzeugten Kammfrequenzspektrum mischt und ein zwischenfrequentes Signal erzeugt, das dem Eingang des Zwischenfrequenzteiles eines Peilempfängers zugeführt wird, und durch Mittel zur Ausblendung derjenigen Einzelfrequenzen aus dem Kammfrequenzspektrum, die zur Umsetzung der konstanten Frequenzen von gleichzeitig von mindestens einem Festsender empfangenen Signale auf die Zwischenfrequenz geeignet sind.

7. Vorrichtung nach Anspruch 6, **gekennzeichnet durch** einen den vorgegebenen Gesamtfrequenzbereich überstreichenden Abtastempfänger, der die konstanten Empfangssignalfrequenzen ermittelt.

8. Vorrichtung nach Anspruch 6 oder 7, **gekennzeichnet durch** ein Bandfilter (40), dem das zwischenfrequente Signal zugeführt wird und dessen Durchlaßband das zwischenfrequente Signal umfaßt.

9. Vorrichtung nach Anspruch 6, 7 oder 8, **gekennzeichnet durch** einen nach dem Watson-Watt-Prinzip arbeitenden Sichtfunkpeiler (50) als Peilempfänger.

## Claims

1. Method of finding signal sources with erratic changes in frequency between various values of a frequency raster extending over a given entire frequency range, **characterized in that** the received signal with a certain instantaneous frequency is mixed with a comb frequency spectrum thereby producing an intermediate frequency signal which is fed into the input of the intermediate frequency part of a direction finder and that in the comb frequency spectrum those single frequencies are suppressed which are suitable for the conversion of constant frequencies of signals simultaneously received from at least one fixed transmitter to the intermediate frequency.

2. Method according to claim 1, **characterized in that** the difference between adjacent frequencies of the comb frequency spectrum is identical to the difference between the adjacent frequencies of the frequency raster available to the signal source.

3. Method according to claim 1 or 2, **characterized in that** the comb frequency spectrum is divided up into several subspectra.

4. Method according to claim 3, **characterized in that** the subspectra are used at random for the mixing with the received signal.

5. Method according to any of claims 1 to 4, **characterized in that** the constant frequencies of the fixed transmitters are detected by a scanning receiver extending over the given entire frequency range.

6. An apparatus for finding signal sources with erratic changes in frequency between various values of a frequency raster extending over a given entire frequency range, in particular with a method according to any of claims 1 to 6, **characterized by** a mixer (30) which mixes the received signal with a comb frequency spectrum produced from a comb spectrum generator (20) and produces an intermediate frequency signal which is fed into the input of the intermediate frequency part of a direction finder and by a means to fade out those single frequencies from the comb frequency spectrum which are suitable for the conversion of constant frequencies of signals received simultaneously from at least one fixed transmitter to the intermediate frequency.

7. Apparatus according to claim 6, **characterized by** a scanning receiver extending over the given entire frequency range which detects the constant receiving signal frequencies.

8. Apparatus according to claim 6 or 7, **characterized by** a band-pass filter (40) to which the intermediate signal is supplied and whose band-pass comprises the intermediate signal.

9. Apparatus according to claim 6, 7 or 8, **characterized by** a visual direction finding radio receiver (50) which functions according to the Watson-Watt principle as a direction finder.

**Revendications**

1. Procédé pour la localisation de sources de signaux présentant une modification par sauts de fréquence entre différentes valeurs d'un réseau de fréquences remplissant une gamme de fréquences globale prédéterminée, caractérisé en ce que l'on mélange le signal reçu présentant une fréquence momentanée déterminée avec un spectre de fréquences de crête et on produit un signal de fréquence intermédiaire qui est amené à l'entrée de la partie des fréquences intermédiaires d'un récepteur radiogoniomètre, et en ce que dans le spectre de fréquences de crête on atténue les fréquences individuelles qui conviennent à la conversion des fréquences constantes des signaux reçus simultanément par au moins un émetteur fixe en la fréquence intermédiaire.

2. Procédé selon la revendication 1, caractérisé en ce que la différence entre des fréquences avoisinantes du spectre de fréquences de crête est égale à la différence entre des fréquences avoisinantes du réseau de fréquences se trouvant à la disposition de la source de signaux.

3. Procédé selon la revendication 1 ou 2, caractérisé en ce que le spectre de fréquences de crête est divisé en plusieurs spectres partiels.

4. Procédé selon la revendication 3, caractérisé en ce que les spectres partiels sont utilisés en alternance stochastique pour le mélange avec le signal reçu.

5. Procédé selon l'une des revendications 1 à 4, caractérisé en ce que les fréquences constantes des émetteurs fixes sont déterminées par un récepteur de balayage ou d'exploration qui balaie la gamme de fréquences globale prédéterminée.

6. Dispositif pour la localisation de source de signaux présentant une modification par sauts de fréquence entre différentes valeurs d'un réseau de fréquences remplissant une gamme de fréquences globale prédéterminée, notamment grâce à un procédé selon l'une des revendications 1 à 6, caractérisé par un mélangeur (30) qui mélange le signal reçu avec un spectre de fréquences de crête produit par un générateur de spectre de crête (20) et qui produit un signal de fréquence intermédiaire, qui est amené à l'entrée de la partie des fréquences intermédiaires d'un récepteur radiogoniomètre, et par un moyen destiné à supprimer les fréquences individuelles du spectre de fréquence de crête qui conviennent à la conversion des fréquences constantes de signaux reçus simultanément par au moins un émetteur fixe en la fréquence intermédiaire.

7. Dispositif selon la revendication 6, caractérisé par un récepteur de balayage ou d'exploration qui balaie la gamme de fréquences globale prédéterminée, récepteur qui détermine les fréquences des signaux de réception constants.

8. Dispositif selon la revendication 6 ou 7, caractérisé par un passe-bande (40) auquel est amené le signal de fréquence intermédiaire et dont la bande passante comprend le signal de fréquence intermédiaire.

9. Dispositif selon la revendication 6, 7 ou 8, caractérisé par un dispositif de relèvement optique (50) fonctionnant selon le principe de Watson-Watt et servant de récepteur radiogoniomètre.

FIG. 1

FIG. 2